# EUROPEAN PATENT APPLICATION

(11) **EP 1 672 723 A2**
(43) Date of publication of application: **21.06.2006**
(21) Application number: 05027330.9
(22) Date of filing: 14.12.2005
(51) Int. Cl.: H01M 2/38, H01M 10/06

(54) **Mixing gas delivery apparatus with check valve**

(30) Priority: 14.12.2004 US 636388 P
(71) Applicant: Jones, William E. M., Freeport (BS)
(72) Inventor: Jones, William E. M., Freeport (BS)
(74) Representative: Callies, Rainer Michael

(57) **Abstract**

Apparatus for air mixing to prevent acid stratification in a battery having a liquid electrolyte is disclosed. A source of pressurized gas is connected to a gas conduit mounted on the battery. Downtubes within each cell of the battery are in fluid communication with the gas conduit. The tubes have outlets positioned near the bottom of each cell and one-way valves which allow gas to flow into the cells but prevent liquid electrolyte from flowing out of the cell through the downtube. The invention also includes a method of mixing a liquid electrolyte including using a one-way valve to allow a mixing gas to flow into a cell but prevent liquid electrolyte from escaping from the cell.

## Description

### Field of the Invention

The invention concerns an apparatus and method for mixing liquid electrolyte in electrical battery cells to prevent acid stratification.

### Background

As a lead-acid battery is discharged, its liquid acid electrolyte will become depleted as the plates in the cells become sulfated and water is formed within the cells by the chemical reactions associated with discharge. During recharge, acid is released back from the plates, and, having a higher specific gravity than the water, sinks to the bottom of the cells and forms a layer of concentrated acid. This concentrated acid, if permitted to remain stratified, can damage the bottoms of the plates. It is recognized as desirable, therefore, to have some method and apparatus for mixing the acid with the water in the cells during battery charging to prevent acid stratification.

One method which can be used to prevent acid stratification is known as "air mixing". Batteries using this method are equipped with an air pump that delivers compressed air through a gas conduit mounted on the battery. The gas conduit is connected to acid resistant "downtubes" that are positioned within each cell. During battery charging, air is pumped through the gas conduit and into each cell through the downtube. Each downtube has an outlet positioned in the lower regions of the cells. The air pumped into each cell forms bubbles which rise through and thereby mix the liquid electrolyte, preventing acid stratification.

A disadvantage experienced with present air mixing apparatus is that acid from the cells rises through the downtube and enters the gas conduit. Even air flow through the conduit during subsequent charging periods does not always clear the acid from the conduit. Allowing acid to remain in the gas conduit outside of the battery cells creates a potential hazard since the acid can be released and injure technicians working with or around the battery. Furthermore, the acid could contact the battery electrical connections and interfere with charging. It would be advantageous to prevent acid from escaping from the cells through the downtube of an air mix apparatus.

### Summary

The invention concerns an apparatus for mixing liquid electrolyte in a cell of an electrical battery. The apparatus comprises a gas distribution conduit mountable on the battery. The conduit is connectable to a source of pressurized gas. An elongated tube is in fluid communication with the conduit. The tube is positionable within the cell and has an outlet positionable proximate to a bottom region of the cell. A one-way valve is positioned to control flow through the tube. The one-way valve may be positioned within the tube and distally to the outlet of the tube. The one-way valve may also be positioned within or outside of the cell. The one-way valve is arranged to allow gas flow through the tube and into the cell and prevent flow of the electrolyte out from the cell.

The invention also concerns an electrical battery having a plurality of cells. The cells contain a liquid electrolyte. A gas distribution conduit is mounted on the battery. The conduit is connectable to a source of pressurized gas. A plurality of elongated tubes are in fluid communication with the conduit. Each one of the tubes is positioned within one of the cells and has an outlet positioned proximate to a bottom region thereof. A plurality of one-way valves, each valve being positioned so as to control flow through one of the tubes, are arranged to allow gas to flow through the tubes and into the cells and prevent flow of the electrolyte out from the cells.

The invention also includes a method of mixing a liquid electrolyte within a cell of an electrical battery. The method comprises:
providing a gas distribution conduit associated with the battery;
connecting the conduit to a source of pressurized gas;
providing an elongated tube in fluid communication with the conduit;
positioning the tube within the cell, an outlet of the tube being located proximate to a bottom region of the cell;
providing a one-way valve controlling flow through the tube, the valve being arranged to allow gas to flow through the tube and into the cell and prevent flow of the electrolyte out from the cell;
allowing the pressurized gas to flow from the source through the conduit and into the cell through the tube, the gas exiting the tube at the outlet thereof and bubbling up through the electrolyte, thereby mixing the electrolyte.

### Brief Description of the Drawings

Figure 1 is a schematic representation of an electrical battery having an air mixing apparatus according to the invention;
Figures 2 and 3 are detailed sectional views of exemplary one-way valves used with the apparatus of Figure 1; and
Figures 4 and 5 are schematic representations of additional electrical battery embodiments each having an air mixing apparatus according to the invention.

### Detailed Description of Preferred Embodiments

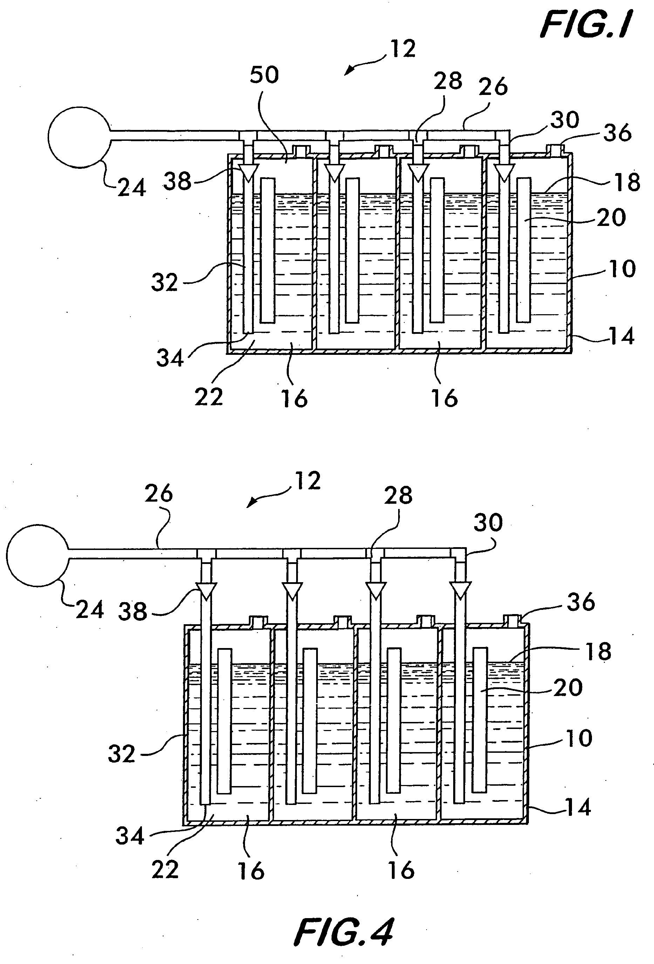

Figure 1 shows an example lead-acid battery 10 having an air mixing apparatus 12 according to the invention. Battery 10 comprises a case 14 that is divided into cells 16 containing liquid electrolyte 18. Plates 20 are positioned within the cells 16. During battery charging, acid is released from the plates and sinks to the bottom regions 22 of the cells 16 where it forms a stratified layer of concentrated acid that can damage the plates. To avoid this problem, air mixing apparatus 12 is used.

Mixing apparatus 12 includes a source of pressurized gas 24, such as an air pump. The pump may be mounted on the case 14 or separate therefrom. Other sources of pressurized gas or air are also feasible, including for example compressed gas from a remote reservoir or compressor. The gas source is in fluid communication with a gas conduit 26 mounted on case 14. Gas conduit 26 may comprise, for example, soft, flexible tubing and include various fittings such as tees 28 and elbows 30 to effect fluid-tight connections throughout the apparatus 12.

Each cell 16 has a downtube 32 that is in fluid communication with the gas conduit 26, for example, through a tee or elbow fitting. The downtubes extend into the cells, and each tube has an outlet 34 for discharge of mixing gas into the cell which the tube occupies. For effective mixing, the outlet 34 is preferably positioned proximate to the bottom region 22 of the cell where the stratified acid layer is likely to form. During battery charging, air or other mixing gas from pressurized source 24 is permitted to flow through the gas conduit 26, through the downtube 32 and into the bottom regions 22 of cells 16. The gas is discharged from the outlets 34 and bubbles up through the liquid electrolyte 18, thereby mixing the electrolyte and preventing the formation of the layer of concentrated acid. The gas is then released to the atmosphere through vents 36 in the tops of the cells above the electrolyte level.

To prevent electrolyte from rising up the downtube 32 and exiting the cells into the gas conduit 26, each downtube has a one-way valve 38 associated with it to control flow through it. Valves 38 may be any type of one-way valve or check valve that permits flow in one direction but impedes it in the reverse direction. Preferably the valves 38 are formed of acid-resistant material, operate in the normally closed position, require a low opening pressure in the gas flow direction, and seal substantially gas tight in the reverse flow direction.

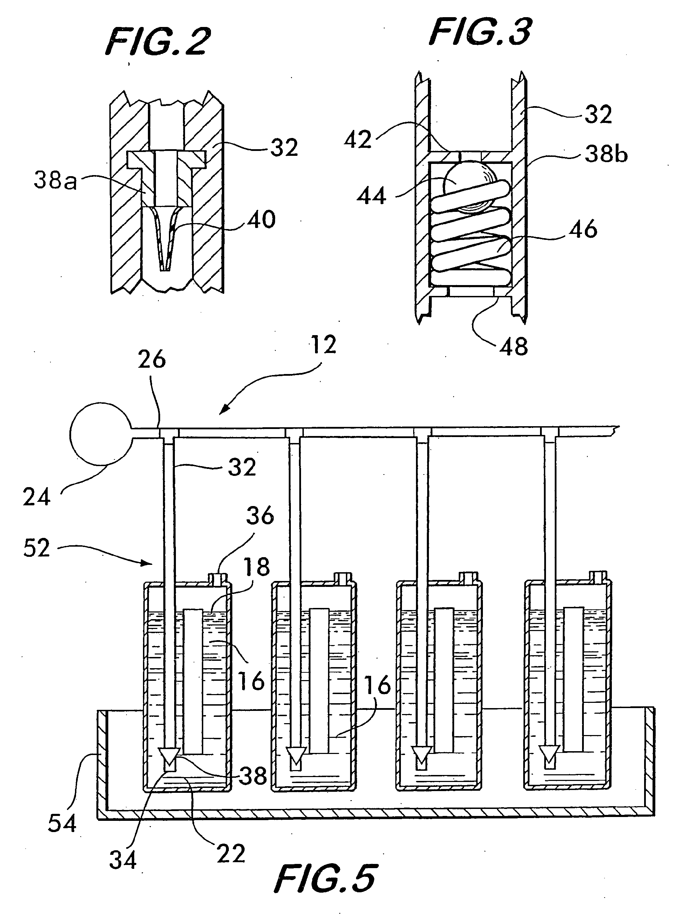

Figure 2 illustrates a duck-bill valve 38a as an example check valve which may be used with the apparatus 12. The duck-bill valve has opposed sidewalls 40 formed of flexible, acid resistant material such as acid resistant EPDM rubber which can withstand the corrosive environment within the battery and provide a flexible, resilient material that allows the duck-bill valve design to operate dependably. Increased pressure upstream of the duck-bill valve separates the sidewalls 40 (which are normally biased into engagment to close the valve) allowing fluid flow through the valve. Increased pressure downstream of the duck-bill valve, in conjunction with the resilient biasing forces within the sidewalls, causes the sidewalls to collapse into engagement with one another and form a seal, closing the valve and substantially preventing flow. Duck-bill check valves useable with the mixing apparatus according to the invention are available from Vernay Laboratories of Yellow Springs, Ohio.

Figure 3 illustrates a spring biased ball check valve 38b. The ball check valve comprises a seat 42 that is engaged by a ball 44 normally biased against the seat by a spring 46 supported on a shoulder 48. Increased pressure upstream of the valve 38b unseats the ball, moving it against the biasing force of the spring to open the valve and allow flow through it. Increased pressure downstream of the valve combines with the spring biasing force to seat the ball and close the valve, substantially preventing flow.

As shown in Figures 1, 4 and 5, valves 38 may be positioned within each downtube to control flow therethrough. The valves may be positioned anywhere along the downtube. In the embodiment shown in Figure 1, valves 38 are positioned within a gas space 50 above the electrolyte level where there is often more room within the cells to accommodate the one-way valves. The embodiment shown in Figure 4 illustrates the valves 38 positioned on the outside of the cells 16. In Figure 5, the valves are again positioned within the cells 16, this time however near the outlets 34 beneath the electrolyte 18. Note that the apparatus 12 may be used with any type of liquid electrolyte battery, for example, an automotive battery 10 where the various cells 16 are housed in a casing 14, or an industrial battery 52 as shown in Figure 5, which has large individual cells 16 that may be housed within a metal tray 54.

In operation, when the gas supply to the conduit 26 is turned off, for example at the end of the charging period, the pressure in the conduit will normally subside to atmospheric pressure. At that time the downtubes 32 will still be full of gas. In the absence of the one-way valves 38, acid will then rise inside each downtube until it reaches an hydrostatic equilibrium level with the rest of the electrolyte in each respective cell 16. In the presence of the one-way valves however, the acid will not rise in the downtubes and the downtubes will stay full of gas. Further, the continuing hydraulic pressure of the acid will maintain the one-way valves firmly in their closed position which will add to its leak-tight effectiveness.

The air mixing apparatus and method according to the invention provides for safer and more efficient battery operation because acid stratification is avoided and the corrosive liquid electrolyte remains at all times within the battery cells.

## Claims

1. An apparatus for mixing liquid electrolyte in a cell of an electrical battery, said apparatus comprising:
a gas distribution conduit mountable on said battery, said conduit being connectable to a source of pressurized gas;
an elongated tube in fluid communication with said conduit, said tube being positionable within said cell and having an outlet positionable proximate to a bottom region of said cell;
a one-way valve controlling flow through said tube, said one-way valve being arranged to allow gas flow through said tube and into said cell and prevent flow of said electrolyte out from said cell.

2. An apparatus according to Claim 1, wherein said one-way valve is positioned within said tube.

3. An apparatus according to Claim 1, wherein said one-way valve is positionable within said cell.

4. An apparatus according to Claim 1, wherein said one-way valve is positioned distally to said outlet of said tube.

5. An apparatus according to Claim 4, wherein said one-way valve is positionable outside of said cell.

6. An apparatus according to Claim 1, wherein said one-way valve comprises a duckbill valve.

7. An apparatus according to Claim 1, wherein said one-way valve comprises a spring biased ball valve.

8. An apparatus for mixing liquid electrolyte in a cell of an electrical battery, said apparatus comprising:
a gas distribution conduit mountable on said battery, said conduit being connectable to a source of pressurized gas;
an elongated tube in fluid communication with said conduit, said tube being positionable within said cell and having an outlet positionable proximate to a bottom region of said cell;
a one-way valve controlling flow through said tube, said one-way valve being positioned within said tube and allowing flow therethrough into said cell and preventing flow through said tube out of said cell.

9. An apparatus according to Claim 8, wherein said one-way valve is positioned proximate to said conduit.

10. An apparatus according to Claim 9, wherein said one-way valve is positionable outside of said cell.

11. An apparatus according to Claim 8, wherein said one-way valve comprises a duckbill valve.

12. An apparatus according to Claim 8, wherein said one-way valve comprises a spring bias ball valve.

13. An electrical battery having a plurality of cells, said cells containing a liquid electrolyte, said battery comprising:
a gas distribution conduit associated with said battery, said conduit being connectable to a source of pressurized gas;
a plurality of elongated tubes in fluid communication with said conduit, each one of said tubes being positioned within one of said cells and having an outlet positioned proximate to a bottom region thereof;
a plurality of one-way valves, each valve positioned to control flow through one of said tubes, said one-way valves being arranged to allow gas to flow through said tubes and into said cells and prevent flow of said electrolyte out from said cells.

14. An electrical battery according to Claim 13, wherein at least one of said one-way valves is positioned distally to said outlet of one of said tubes.

15. An electrical battery according to Claim 13, wherein at least one of said one-way valves is positioned outside of one of said cells.

16. An electrical battery according to Claim 13, wherein at least one of said one-way valves is positioned within one of said tubes.

17. An electrical battery according to Claim 13, wherein at least one of said one-way valves is positioned within one of said cells.

18. An electrical battery according to Claim 13, wherein at least one of said one-way valves comprises a duckbill valve.

19. An electrical battery according to Claim 13, wherein at least one of said one-way valves comprises a spring biased ball valve.

20. A method of mixing a liquid electrolyte within a cell of an electrical battery, said method comprising:
providing a gas distribution conduit associated with said battery;
connecting said conduit to a source of pressurized gas;
providing an elongated tube in fluid communication with said conduit;
positioning said tube within said cell, an outlet of said tube being located proximate to a bottom region of said cell;
providing a one-way valve controlling flow through said tube, said valve being arranged to allow gas to flow through said tube and into said cell and prevent flow of said electrolyte out from said cell;
allowing said pressurized gas to flow from said source through said conduit and into said cell through said tube, said gas exiting said tube at said outlet thereof and bubbling up through said electrolyte, thereby mixing said electrolyte.
